# EUROPEAN PATENT APPLICATION

(11) **EP 4 851 051 A1**
(43) Date of publication of application: **09.12.2026**
(21) Application number: 26182131.8
(22) Date of filing: 29.05.2026
(51) Int. Cl.: B64D 35/022, B64D 35/023, B64D 35/026, F02K 5/00

(54) **CONCENTRIC GEARBOX ARRANGEMENT FOR HYBRID-ELECTRIC POWERPLANT**

(30) Priority: 30.05.2025 US 202519224271
(71) Applicant: Pratt & Whitney Canada Corp., Longueuil, Québec J4G 1A1 (CA)
(72) Inventor: DUROCHER, Eric S., (01BE5) Longueuil, J4G 1A1 (CA); ABDELNOUR, Michel, (01BE5) Longueuil, J4G 1A1 (CA)
(74) Representative: Dehns

(57) **Abstract**

A propulsion system (20) for an aircraft is provided. The propulsion system (20) includes an engine (22) including an input shaft (58) rotatable about a rotational axis (44). The propulsion system (20) also includes a drivetrain (26) including an output shaft (60), a gear assembly (64), and an electric motor. The output shaft (60) includes a first axial end and a second axial end. The output shaft (60) is rotatable about the rotational axis (44). The gear assembly (64) couples the input shaft (58) to the output shaft (60). The electric motor includes a rotor coupled to the output shaft (60) between the first axial end and the gear assembly (64). The propulsion system (20) further includes a propulsor (24) mounted at the first axial end of the output shaft (60) and rotatable about the rotational axis (44).

## Description

### TECHNICAL FIELD

This disclosure relates generally to hybrid-electric propulsion systems for aircraft and, more particularly, to a propulsion system drivetrain including an electric motor.

### BACKGROUND OF THE ART

Hybrid-electric propulsion systems for aircraft may typically include an electric motor configured to supplement or replace a propulsion system engine (e.g., a gas turbine engine, an intermittent combustion engine, etc.) output to one or more propulsors. Various hybrid-electric propulsion system configurations are known. While these known propulsion system configurations may be suitable for their intended purposes, there is always room in the art for improvement.

### SUMMARY

According to an aspect of the present disclosure, a propulsion system for an aircraft is provided. The propulsion system includes an engine including an input shaft rotatable about a rotational axis. The propulsion system also includes a drivetrain including an output shaft, a gear assembly, and an electric motor. The output shaft includes a first axial end and a second axial end. The output shaft is rotatable about the rotational axis. The gear assembly couples the input shaft to the output shaft. The electric motor includes a rotor coupled to the output shaft between the first axial end and the gear assembly. The propulsion system further includes a propulsor mounted at the first axial end of the output shaft and rotatable about the rotational axis.

In any of the aspects or examples described above and herein, the propulsion system may further include a bevel transmission system coupled to the output shaft between the propulsor and the electric motor.

In any of the aspects or examples described above and herein, the bevel transmission system may include a main bevel gear and at least one accessory bevel gear radially offset from the rotational axis. The main bevel gear may be coupled to the output shaft and may be engaged with the at least one accessory bevel gear.

In any of the aspects or examples described above and herein, the main bevel gear may be rotatable about the rotational axis and the at least one accessory bevel gear may be rotatable about an axis perpendicular to the rotational axis.

In any of the aspects or examples described above and herein, the main bevel gear may be coupled to the output shaft via a spline coupling.

In any of the aspects or examples described above and herein, the propulsion system may further include a propeller control unit (PCU) coupled to the at least one accessory bevel gear.

In any of the aspects or examples described above and herein, the gear assembly may include at least one planetary gear assembly.

In any of the aspects or examples described above and herein, the engine and the electric motor may be disposed on opposing sides of the gear assembly with respect to the rotational axis.

In any of the aspects or examples described above and herein, the rotor may be coupled to the output shaft via a spline coupling, and the rotor may be rotatable about the rotational axis.

In any of the aspects or examples described above and herein, the propulsion system may further include a front bearing housing disposed at the first axial end of the output shaft, the drivetrain may further include a gearbox housing including the gear assembly, and the electric motor may further include a static structure engaged with the rotor and mounted between the front bearing housing and the gearbox housing.

According to an aspect of the present disclosure, a propulsion system for an aircraft is provided. The propulsion system includes an engine including an input shaft rotatable about a rotational axis. The propulsion system also includes a drivetrain including an output shaft, a gear assembly, and an electric motor. The gear assembly couples the input shaft to the output shaft. The output shaft is rotatable about the rotational axis. The electric motor includes a rotor coupled to the output shaft. The rotor is rotatable about the rotational axis. The propulsion system further includes a propulsor mounted on the output shaft. The propulsor is rotatable about the rotational axis. The propulsion system also includes a PCU coupled to the output shaft between the propulsor and the electric motor.

In any of the aspects or examples described above and herein, the propulsion system may further include a bevel transmission system that couples the PCU to the output shaft.

In any of the aspects or examples described above and herein, the bevel transmission system may include a main bevel gear and at least one accessory bevel gear radially offset from the rotational axis. The main bevel gear may be coupled to the output shaft and engaged with the at least one accessory bevel gear, and the PCU may be coupled to the at least one accessory bevel gear.

In any of the aspects or examples described above and herein, the main bevel gear may be rotatable about the rotational axis and the at least one accessory bevel gear may be rotatable about an axis perpendicular to the rotational axis.

In any of the aspects or examples described above and herein, the main bevel gear may be coupled to the output shaft via a spline coupling.

In any of the aspects or examples described above and herein, the gear assembly may include at least one planetary gear assembly.

In any of the aspects or examples described above and herein, the engine and the electric motor may be disposed on opposing sides of the gear assembly with respect to the rotational axis.

In any of the aspects or examples described above and herein, the rotor may be coupled to the output shaft via a spline coupling, and the rotor may be rotatable about the rotational axis.

In any of the aspects or examples described above and herein, the propulsion system may further include a front bearing housing, the drivetrain may further include a gearbox housing including the gear assembly, and the electric motor may further include a static structure engaged with the rotor and mounted between the front bearing housing and the gearbox housing.

According to an aspect of the present disclosure, a propulsion system for an aircraft is provided. The propulsion system includes an engine including an input shaft rotatable about a rotational axis. The propulsion system also includes a drivetrain including an output shaft, at least one planetary gear assembly, and an electric motor. The at least one planetary gear assembly couples the input shaft to the output shaft. The output shaft is rotatable about the rotational axis. The electric motor includes a rotor coupled to the output shaft. The electric motor and the engine are disposed on opposing sides of the at least one planetary gear assembly with respect to the rotational axis. The propulsion system further includes a propulsor mounted to the output shaft. The propulsor is rotatable about the rotational axis.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### DESCRIPTION OF THE DRAWINGS

FIG. 1 illustrates an aircraft including a propulsion system, in accordance with one or more embodiments of the present disclosure.
FIG. 2 schematically illustrates a cutaway, side view of an aircraft propulsion system, in accordance with one or more embodiments of the present disclosure.
FIG. 3 schematically illustrates a cutaway, side view of a portion of the aircraft propulsion system, in accordance with one or more embodiments of the present disclosure.

### DETAILED DESCRIPTION

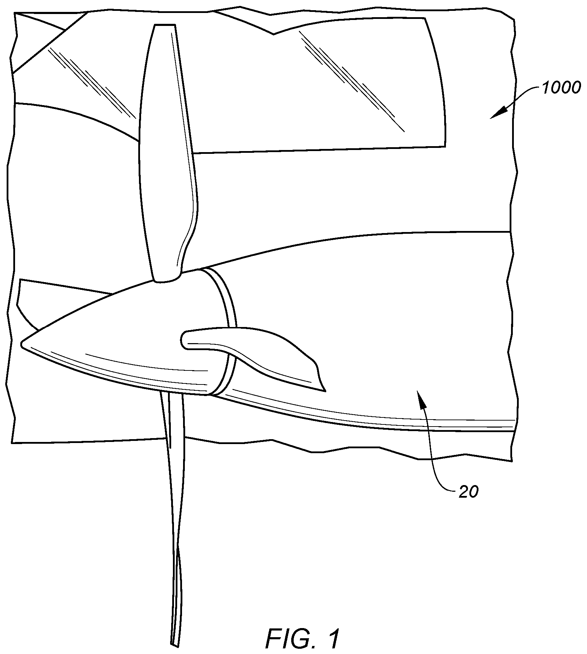

FIG. 1 illustrates an aircraft 1000 including at least one propulsion system 20. Briefly, the aircraft may be a fixed-wing aircraft (e.g., an airplane), a rotary-wing aircraft (e.g., a helicopter), a tilt-rotor aircraft, a tilt-wing aircraft, or another aerial vehicle. Moreover, the aircraft may be a manned aerial vehicle or an unmanned aerial vehicle (UAV, e.g., a drone).

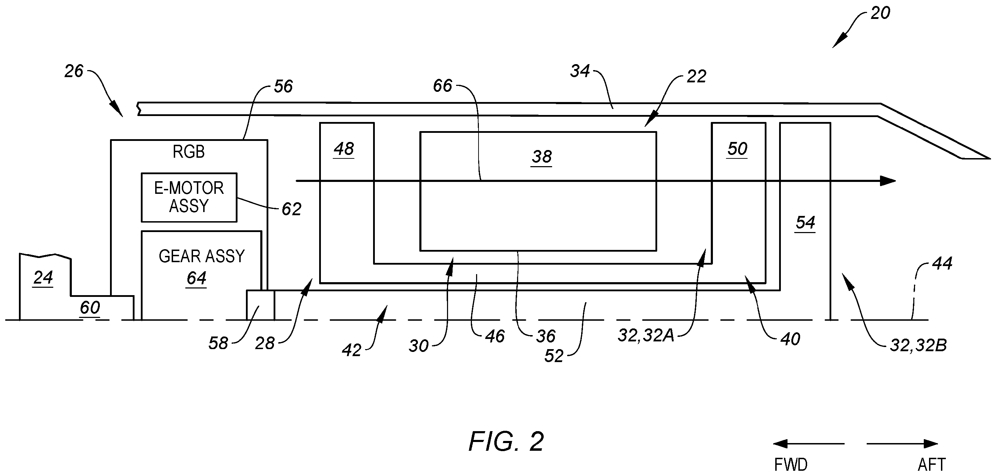

FIG. 2 schematically illustrates a cutaway, side view of the propulsion system 20. The propulsion system 20 of FIG. 2 includes an engine 22, a propulsor 24, and a drivetrain 26. The engine 22 of FIG. 2 is configured as a turboprop gas turbine engine. However, the present disclosure is not limited to any particular configuration of gas turbine engine for the propulsion system 20, and examples of gas turbine engine configurations for the propulsion system 20 may include, but are not limited to, a turbofan engine, a turbojet engine, a propfan engine, or the like. Aspects of the present disclosure may be equally applicable to aircraft propulsion systems including other engine configurations such as, but not limited to, rotary engines, piston engines, or other intermittent combustion engines.

The engine 22 of FIG. 2 includes a compressor section 28, a combustor section 30, a turbine section 32, and an engine static structure 34. The combustor section 30 includes a combustor 36 (e.g., an annular combustor) forming a combustion chamber 38. The turbine section 32 includes a high-pressure turbine 32A and a power turbine 32B.

Components of the compressor section 28 and/or the turbine section 32 of FIG. 2 form a first rotational assembly 40 (e.g., a high-pressure spool) and a second rotational assembly 42 of the engine 22. The first rotational assembly 40 and the second rotational assembly 42 are mounted for rotation about a rotational axis 44 (e.g., an axial centerline) of the engine 22 relative to the engine static structure 34.

The first rotational assembly 40 includes a first shaft 46, a bladed compressor rotor 48 for the compressor section 28, and a bladed first turbine rotor 50 for the high-pressure turbine 32A. The first shaft 46 interconnects the bladed compressor rotor 48 and the bladed first turbine rotor 50.

The second rotational assembly 42 of FIG. 2 includes a second shaft 52 (e.g., an engine output shaft) and a bladed second turbine rotor 54 for the power turbine 32B. The second shaft 52 is connected to the bladed second turbine rotor 54. The second shaft 52 is coupled with the propulsor 24 by the drivetrain 26.

The drivetrain 26 includes a gearbox 56 (e.g., a reduction gearbox (RGB)), an input shaft 58, an output shaft 60 (e.g., a propulsor output shaft or a propeller shaft), and an electric motor assembly 62. The gearbox 56 includes and houses a gear assembly 64. The gear assembly 64 couples the input shaft 58 with the output shaft 60. For example, the gear assembly 64 may be a concentric reduction gear assembly configured to drive rotation of the output shaft 60 at a reduced rotational speed relative to the input shaft 58 about the rotational axis 44. The input shaft 58 is coupled with (e.g., mounted on) the second shaft 52, and interconnects the second shaft 52 with the gear assembly 64. The output shaft 60 is coupled with (e.g., mounted on) the propulsor 24, and interconnects the propulsor 24 with the gear assembly 64. As described in further detail, the electric motor assembly 62 includes one or more electric motors coupled with the output shaft 60.

The engine static structure 34 includes engine casings, cowlings, and other fixed (e.g., non-rotating) structures of the engine 22 which form, house, and/or support components of the engine 22 such as, but not limited to, those of the compressor section 28, the combustor section 30, and the turbine section 32. The engine static structure 34 may include one or more bearing assemblies configured to rotationally support components of the first rotational assembly 40 and the second rotational assembly 42.

During operation of the propulsion system 20 of FIG. 2, ambient air enters the propulsion system 20 (e.g., through an air intake) and is directed through the engine 22 along a core gas flow path 66. The ambient air flow along the core gas flow path 66 is compressed in the compressor section 28 by rotation of the bladed compressor rotor 48, and directed into the combustor 36 (e.g., the combustion chamber 38). Fuel is injected into the combustion chamber 38 and mixed with the compressed air to provide a fuel-air mixture. This fuel-air mixture is ignited, and combustion products thereof flow through the high-pressure turbine 32A and the power turbine 32B and are exhausted from the propulsion system 20. The bladed first turbine rotor 50 and the bladed second turbine rotor 54 rotationally drive the first rotational assembly 40 and the second rotational assembly 42, respectively, in response to the combustion gas flow through the high-pressure turbine 32A and the power turbine 32B along the core gas flow path 66. The second rotational assembly 42 (e.g., the second shaft 52) drives rotation of the propulsor 24 through the drivetrain 26. The electric motor(s) of the electric motor assembly 62 may be selectively operated to drive rotation of the propulsor 24 through the output shaft 60 in combination with the gear assembly 64. Additionally, the electric motor(s) of the electric motor assembly 62 may be driven by the drivetrain 26, via the output shaft 60, to generate electrical power for one or more electrical systems of the propulsion system 20 and/or the aircraft 1000 (see FIG. 1).

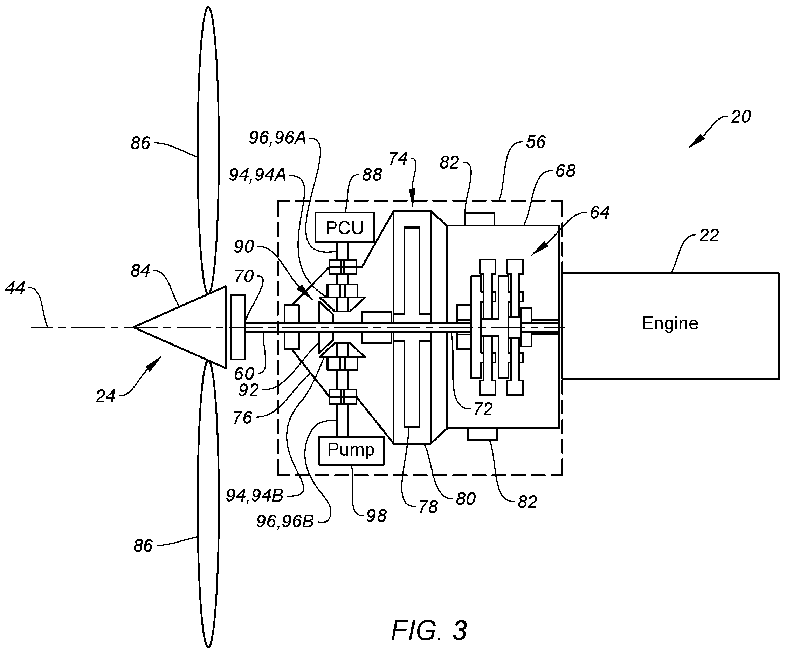

FIG. 3 schematically illustrates a cutaway, side view of a portion of the propulsion system 20 showing the propulsor 24, the gearbox 56, and the engine 22. The gearbox 56 includes a gearbox housing 68, the output shaft 60, and the gear assembly 64. The gearbox housing 68 includes the gear assembly 64 and may additionally include or otherwise support one or more bearing assemblies for rotatably supporting the output shaft 60. The output shaft 60 extends circumferentially about (e.g., completely around) the rotational axis 44. The output shaft 60 extends from a first axial end 70 to a second axial end 72 along the rotational axis 44 in an aft direction. The first axial end 70 is mounted to or otherwise disposed at (e.g., on, adjacent, or proximate) the propulsor 24 such that rotation of the output shaft 60 about the rotational axis 44 drives rotation of the propulsor 24. The gear assembly 64 may be coupled to the output shaft 60 at (e.g., on, adjacent, or proximate) the second axial end 72. The gear assembly 64 may be a concentric reduction gear assembly that allows the output shaft 60 to rotate at a reduced rate compared to the input shaft 58, as described in greater detail below.

The electric motor assembly 62 of the drivetrain 26 includes an electric motor 74 mounted in the gearbox 56 between a front bearing housing 76 and the gear assembly 64. The front bearing housing 76 may be considered a front portion of the gear box housing 68. The electric motor 74 includes a rotor 78 that is coupled to the output shaft 60 via a spline coupling, enabling the rotor 78 to rotate about the rotational axis 44 with the output shaft 60. The coupling of the rotor 78 to the output shaft 60 may result in a lower speed and a higher torque when compared with the input shaft 58. The electric motor 74 also includes a static structure 80 engaged with the rotor 78. The static structure 80 is fastened to and between the front bearing housing 76 and the gearbox housing 68 surrounding the gear assembly 64. The placement and isolation of the electric motor 74 may reduce external loads transmitted to the electric motor 74. Such external loads may instead be transmitted through a main bearing of the output shaft 60, through the front bearing housing 76, to the gearbox housing 68, and to a hybrid-electric propulsion (HEP) engine mount system 82. The electric motor 74 and the engine 22 are disposed on opposing sides of the gear assembly 64 with respect to the rotational axis 44.

The gear assembly 64 of FIG. 3 is configured as a concentric gear assembly having the input shaft 58 and the output shaft 60 rotatable about the rotational axis 44. The gear assembly 64 may be a reduction gear assembly in the form of one or more planetary gear assemblies (or epicyclic gear assemblies). The planetary gear assembly includes a central sun gear that may be mounted to or otherwise disposed at (e.g., on, adjacent, or proximate) the input shaft 58, and rotatable about the rotational axis 44. The planetary gear assembly also includes a set of planet gears rotatably mounted on respective planet gear shafts. Each planet gear and shaft combination may be rotatable about an axis that is radially offset from the rotational axis 44. One or more of the planet gear shafts may be mounted to or otherwise disposed at (e.g., on, adjacent, or proximate) a planet carrier. As the planet gears engage with and revolve around the sun gear, the planet carrier rotates about the rotational axis 44. The planet carrier may be mounted to or otherwise disposed at (e.g., on, adjacent, or proximate) the output shaft 60, thereby enabling rotation of the output shaft 60 with the planet carrier about the rotational axis 44 at a reduced rate compared to the input shaft 58 and the sun gear.

Alternatively, the gear assembly 64 may include two planetary gear assemblies, as shown in FIG. 3. A first planetary gear assembly includes a central sun gear coupled to the input shaft, as described above, and a planet carrier coupled to a sun gear of a second planetary gear assembly. A planet carrier of the second planetary gear assembly may be coupled to the output shaft 60, as described above. However, the present disclosure is not limited to any particular number, arrangement, size, or other configuration of gears in the concentric gear assembly 64.

The propulsor 24 is configured for rotation about the rotational axis 44 as shown in FIG. 3. The propulsor 24 of FIG. 3 is configured as a propeller that includes a hub 84 and propeller blades 86 mounted to the hub 84. The propeller blades 86 are circumferentially distributed about the hub 84, for example, relative to the rotational axis 44. The propeller blades 86 may be configured as variable-pitch propeller blades. For example, the propeller blades 86 may each be rotatable about a lengthwise axis to control (e.g., selectively vary) a pitch (e.g., an angle; sometimes referred to as a "beta angle") of the propeller blades 86. The present disclosure, however, is not limited to propeller configurations for the propulsor 24 and the propulsor 24 may alternatively be configured as a fan (e.g., for a turbofan propulsion system), an open rotor propulsor, or another configuration of aircraft propulsion rotor.

For configurations of the propulsion system 20 in which the propulsor 24 includes variable-pitch propeller blades 86, a PCU 88 may control (e.g., modulate) the pitch of the propeller blades 86. For example, the PCU 88 may control the pitch of the propeller blades 86 to achieve a desired thrust of the propulsion system 20 (see FIG. 1) while the propulsor 24 rotation speed remains constant or substantially constant (e.g., a constant-speed propeller assembly).

A bevel transmission system 90 is disposed between the electric motor 74 and the propulsor 24 and is coupled to the output shaft 60. The bevel transmission system 90 requires less radial space around the rotational axis 44 than the electric motor 74, thereby providing a smoother transition in required radial height between the propulsor 24 and the electric motor 74, and improving aircraft nacelle dimensions and aircraft drag performance.

The bevel transmission system 90 may include a main bevel gear 92 that is coupled to the output shaft 60 via a spline coupling, for example. The main bevel gear 92 extends circumferentially about (e.g., completely around) and rotates about the rotational axis 44. The main bevel gear 92 may include gear teeth engaged with (e.g., meshed with) gear teeth of one or more accessory bevel gears 94. The one or more accessory bevel gears 94 are radially offset from the rotational axis 44, and have respective rotational axes that are perpendicular to the rotational axis 44. Each of the one or more accessory bevel gears 94 may be fixedly mounted to a bevel shaft 96 coupled to an accessory load assembly having at least one accessory load. The accessory load may be mounted to an exterior or an interior of the gearbox housing 68 or the front bearing housing 76.

As shown in FIG. 3, the accessory load may include the PCU 88, which may be coupled to a first bevel shaft 96A mounted to a first accessory bevel gear 94A. The PCU 88 may be coupled to the first bevel shaft 96A at an exterior of the front bearing housing 76 between the propulsor 24 and the electric motor 74. As another example, one or more oil pumps 98 may be coupled to a second bevel shaft 96B mounted to a second accessory bevel gear 94B. The one or more oil pumps 98 may be coupled to the second bevel shaft 96B at an exterior of the front bearing housing 76 between the propulsor 24 and the electric motor 74. The present disclosure is not limited to any particular number, arrangement, size, or other configuration of gears in the bevel transmission system 90. Additionally, the present disclosure is not limited to the aforementioned exemplary accessory loads and the at least one accessory load may include additional or alternative rotational loads or other loads, such as an air compressor unit, an electrical generation unit (e.g., a low-voltage generator), and a hydraulic pump.

The one or more oil pumps 98 may be connected in fluid communication between an oil tank and the PCU 88, and may be configured to direct oil from the oil tank to the PCU 88. The PCU 88 may be configured to direct and control a flow of oil from the one or more oil pumps 98 to control the pitch of the propeller blades 86. The oil may additionally provide lubrication for rotational components of the propulsor 24 and the engine 22 (e.g., the first rotational assembly 40 and/or the second rotational assembly 42) such as, but not limited to, bearings, shafts, gears and/or gear assemblies, and the like.

The electric motor assembly 62 may include the single electric motor 74 engaged with the output shaft 60 as shown, for example, in FIG. 3. Alternatively, the electric motor assembly 62 may include a plurality of electric motors engaged with and axially distributed along the output shaft 60.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A propulsion system (20) for an aircraft (1000), the propulsion system (20) comprising:
an engine (22) comprising an input shaft (58) rotatable about a rotational axis (44);
a drivetrain (26) comprising an output shaft (60), a gear assembly (64), and an electric motor (74),
the output shaft (60) comprising a first axial end (70) and a second axial end (72), the output shaft (60) being rotatable about the rotational axis (44),
the gear assembly (64) coupling the input shaft (58) to the output shaft (60), and
the electric motor (74) comprising a rotor (78), the rotor (78) coupled to the output shaft (60) between the first axial end (70) and the gear assembly (64); and
a propulsor (24) mounted at the first axial end (70) of the output shaft (60), the propulsor (24) being rotatable about the rotational axis (44).

2. The propulsion system of claim 1, further comprising a bevel transmission system (90) coupled to the output shaft (60) between the propulsor (24) and the electric motor (74).

3. The propulsion system of claim 2, wherein the bevel transmission system (90) comprises a main bevel gear (92) and at least one accessory bevel gear (94; 94A; 94B) radially offset from the rotational axis (44), the main bevel gear (92) coupled to the output shaft (60) and engaged with the at least one accessory bevel gear (94; 94A; 94B).

4. The propulsion system of claim 3, wherein the main bevel gear (92) is rotatable about the rotational axis (44) and the at least one accessory bevel gear (94; 94A; 94B) is rotatable about an axis perpendicular to the rotational axis (44).

5. The propulsion system of claim 3 or 4, wherein the main bevel gear (92) is coupled to the output shaft (60) via a spline coupling.

6. The propulsion system of any of claims 3 to 5, further comprising a propeller control unit (PCU) (88) coupled to the at least one accessory bevel gear (94; 94A; 94B).

7. The propulsion system of any preceding claim, wherein the gear assembly (64) comprises at least one planetary gear assembly (64).

8. The propulsion system of any preceding claim, wherein the engine (22) and the electric motor (74) are disposed on opposing sides of the gear assembly (64) with respect to the rotational axis (44).

9. The propulsion system of any preceding claim, wherein the rotor (78) is coupled to the output shaft (60) via a spline coupling, and the rotor (78) is rotatable about the rotational axis (44).

10. The propulsion system of any preceding claim, further comprising a front bearing housing (76) disposed at the first axial end (70) of the output shaft (60), wherein the drivetrain (26) further comprises a gearbox housing (68) including the gear assembly (64), and the electric motor (74) further comprises a static structure (80) engaged with the rotor (78) and mounted between the front bearing housing (76) and the gearbox housing (68).

11. A propulsion system (20) for an aircraft (1000), the propulsion system (20) comprising:
an engine (22) comprising an input shaft (58) rotatable about a rotational axis (44);
a drivetrain (26) comprising an output shaft (60), a gear assembly (64), and an electric motor (74),
the gear assembly (64) coupled to the input shaft (58) and the output shaft (60), the output shaft (60) being rotatable about the rotational axis (44), and
the electric motor (74) comprising a rotor (78), the rotor (78) coupled to the output shaft (60), and the rotor (78) being rotatable about the rotational axis (44);
a propulsor (24) mounted on the output shaft (60), the propulsor (24) being rotatable about the rotational axis (44); and
a propeller control unit (PCU) (88) coupled to the output shaft (60) between the propulsor (24) and the electric motor (74).

12. The propulsion system of claim 11, further comprising a bevel transmission system (90) that couples the PCU (88) to the output shaft (60),
optionally wherein the bevel transmission system (90) comprises a main bevel gear (92) and at least one accessory bevel gear (94; 94A; 94B) radially offset from the rotational axis (44), the main bevel gear (94; 94A; 94B) coupled to the output shaft (60) and engaged with the at least one accessory bevel gear (94; 94A; 94B), and the PCU (88) coupled to the at least one accessory bevel gear (94; 94A; 94B),
further optionally wherein:
the main bevel gear (92) is rotatable about the rotational axis (44) and the at least one accessory bevel gear (94; 94A; 94B) is rotatable about an axis perpendicular to the rotational axis (44); and/or
the main bevel gear (92) is coupled to the output shaft (60) via a spline coupling.

13. The propulsion system of claim 11 or 12, wherein:
the gear assembly (64) comprises at least one planetary gear assembly (64); and/or
the engine (22) and the electric motor (74) are disposed on opposing sides of the gear assembly (64) with respect to the rotational axis (44).

14. The propulsion system of any of claims 11 to 13, wherein:
the rotor (78) is coupled to the output shaft (60) via a spline coupling, and the rotor (78) is rotatable about the rotational axis (44); and for
the propulsion system (20) further comprises a front bearing housing (76), wherein the drivetrain (26) further comprises a gearbox housing (68) including the gear assembly (64), and the electric motor (74) further comprises a static structure (80) engaged with the rotor (78) and mounted between the front bearing housing (76) and the gearbox housing (68).

15. A propulsion system (20) for an aircraft (1000), the propulsion system (20) comprising:
an engine (22) comprising an input shaft (58) rotatable about a rotational axis (44);
a drivetrain (26) comprising an output shaft (60), at least one planetary gear assembly (64), and an electric motor (74),
the at least one planetary gear assembly (64) coupled to the input shaft (58) and the output shaft (60), the output shaft (60) being rotatable about the rotational axis (44), and
the electric motor (74) comprising a rotor (78), the rotor (78) coupled to the output shaft (60), and the electric motor (74) and the engine (22) disposed on opposing sides of the at least one planetary gear assembly (64) with respect to the rotational axis (44); and
a propulsor (24) mounted to the output shaft (60), the propulsor (24) being rotatable about the rotational axis (44).
